# EUROPEAN PATENT APPLICATION

(11) **EP 4 428 504 A1**
(43) Date of publication of application: **11.09.2024**
(21) Application number: 23160747.4
(22) Date of filing: 08.03.2023
(51) Int. Cl.: G01H 7/00, G10K 15/08, H04S 7/00

(54) **AURALIZING A SCENARIO**

(71) Applicant: Siemens Industry Software NV, 3001 Leuven (BE)
(72) Inventor: BERIOT, Hadrien, 78110 Le Vesinet (FR); BOUSSUGE, Flavien, 78120 Rambouillet (FR); LIEBIG, Veronika, 86551 Aichach (DE); PAPADOPOULOS, Theodoros, 80333 München (DE); VAN PUTTEN, Thijs, 2220 Hallaar (BE); CARDENUTO, Joao, Sao Carlos (BR)
(74) Representative: Siemens Patent Attorneys

(57) **Abstract**

The invention relates to a computer-implemented method for auralizing a scenario (SCN). To provide the auralization most efficiently the method is comprising:
(a) providing a 3D geometry model (GMD) of a scenery (SCY) of said scenario (SCN),
(b) constructing a 3D mesh (MSH) on basis of the 3D geometry model (GMD),
(c) assigning absorption coefficients (ABC) to the surfaces of said 3D geometry model (GMD),
(d) providing at least one sound source model comprising a spatial sound emission definition (SED) including a temporal progression of a noise emission,
(e) simulating the acoustics of at least one sound receptor (MIC) located in the scenery (SCY).

The method further relates to a system (CPS) for carrying out the method.

## Description

### FIELD OF THE INVENTION

The invention relates to auralizing a scenario.

Further the invention relates to a system for carrying out the method according to the invention, wherein said system comprises at least one processor.

### BACKGROUND OF THE INVENTION

Acoustics simulation results characterize the acoustic interaction between all objects. These results may serve as input to render the simulated soundscape in a process called auralization. Auralization (Auralization and auralizing = "making audible" from lat. auris = engl. 'ear' = auricular) is the technique for creating audible sound files from numerical (simulated, measured, synthesized) data [Vorlander 2020] (ref. below). Therefore, auralization may be considered as the experience of acoustic phenomena rendered as a soundfield in a virtualized space. Further, auralizing may be a method for artificially modelling an acoustic situation. A room, a sound source and objects contained in said room may be simulated to make the room audible. This process takes geometric and acoustic properties of the room and objects contained into account. It is further useful for generating coherent sound environments within virtual immersion systems, e.g., 3-D gaming platforms.

The following publications suggest some approaches of auralization or aspects of it.
[Ahrens 2019] Ahrens, A., 2019. Characterizing auditory and audio-visual perception in virtual environments.
[Abarghooie 2021] Abarghooie, R., Zomorodian, Z.S., Tahsildoost, M. and Shaghaghian, Z., 2021. A Machine-learning Framework for Acoustic Design Assessment in Early Design Stages. arXiv preprint arXiv:2109.06459.
[Vorländer 2020 ] Vorländer, M., 2020. Auralization. Berlin/Heidelberg, Germany: Springer International Publishing.
[Yamazaki et al. 2021] Yamazaki, A., Wakatsuki, N., Mizutani, K., Okada, Y. and Zempo, K., 2021, August. Effects of Audio-Visual Information on Interpersonal Distance in Real and Virtual Environments. In IFIP Conference on Human-Computer Interaction (pp. 405-410). Springer, Cham.
[Valve Corporation] https://valvesoftware.github.io/steam-audio/#learn-more (accessed in 09/Jun/2022)
[Polycam 2022] - https://poly.cam/ (accessed in 09/Jun/2022)
[Noé 2009] Noé, N., Gaudaire, F., Jean, P. and Vermet, M., 2009. A general ray-tracing solution to reflection on curved surfaces and diffraction by their bounding edges. proceedings of the 9th ICTCA, Dresden.
[Atelier 7hz] https://apps.apple.com/ca/app/clapreverb/id1407467855 (accessed in 09/Jun/2022)

[Yamazaki et al. 2021] has studied interpersonal distances in both virtual environment (VE) and real environment (RE). The authors use an approach that consists in scanning a room with the help of Lidar sensors from an Ipad Pro. In this study, the authors have used Unity Game Engine to visualize the 3D-object representing the room from the Lidar-scanned data and auralize the room using available tools as the Steam Audio [Valve Corporation] as auralization plug-in. Although some calibration of room is performed, the calibration is constrained to align the perceived size of the virtual environment compared to the real environment. There is no mention regarding physically accurate simulation of the acoustics inherent to the space and the objects within.

[Abarghooie 2021] uses fully connected Deep Neural Networks (DNN) to estimate acoustics figures such as reverberant time, early decay time, among others. The inputs for the DNN are the room dimensions, an estimation of the furniture total surface and the materials present in the room. To the best of the inventors' knowledge, no method uses 3D scans to estimate the absorption coefficients and enable physically accurate simulation of the enclosure and the objects inside.

[Hargreaves et al. 2019] presents a framework for auralization that includes both source and listener directivity, in the form of head-related transfer functions (HRTF), but it still requires a rerun of the boundary element method simulation when there is a change in the source directivity. Also, the method defined in the paper has good accuracy for the hemi-anechoic and fully-anechoic cases, but it is deficient for rooms and enclosures, as the authors highlight.

[Mehra et al. 2014] presents a framework that consists in exploring the spherical harmonics representation of a source. The expansion is combined to precalculated room frequency responses using the BEM and equivalent source method. Final auralization is achieved for any directional source by combining the different weights that arise from the decomposition of a source directivity into spherical harmonics. The framework, however, does not extend auralization for the full audible frequency range due to the limitations of the simulation methods employed, as highlighted by the authors. It does not mention any scanning technique that could be applied to create the visuals of a room.

Currently a general quick and efficient method enabling automatic auralization is not available.

### SUMMARY OF THE INVENTION

It is one object of the invention to define a method to preferably automatically auralize the acoustics interaction of a digital model of a scenery preferably an enclosure and all the objects within contained. This auralization may include generating a model and simulating the acoustics of the scenery. The method may combine different sources of data, such as material databases, point clouds, pictures and textures generated by 3D scans, and provide input for auralization engines.

The invention proposes a computer-implemented method of the incipiently mentioned type for auralizing a scenario, comprising:
(a) providing a 3D geometry model of a scenery of said scenario,
(b) constructing a 3D mesh on basis of the 3D geometry model,
(c) assigning absorption coefficients to the surfaces of said 3D geometry model,
(d) providing at least one sound source model comprising a spatial sound emission definition including a temporal progression of a noise emission,
(e) simulating the acoustics of at least one sound receptor located in the scenery.

A scenery as understood by the invention may be any kind of arrangement of a 3D surrounding which may comprise 3-D-objects. In particular the scenery may be partially or completely limited by boundaries like room walls, a floor, and a roof. Such closed room may be termed an enclosure. The scenery as to be understood herein may therefore be an open range, a partly closed room or a closed room or an enclosure. The scenery may contain or comprise objects of 3-D geometry.

Herein a scenario combines the scenery with an incident, event or happening - which - in the focused of this invention - involves a sound emission or generation.

Simulation may use known techniques, in particular may be done by simulation of mirror sound sources, ray tracing and the calculation of diffuse sound. Auralization is useful in configuring the soundscape of architectural structures, e.g., concert venues or public spaces.

The method according to the invention includes:
- scenery acquisition and pre-processing and
- acoustic simulation.

The step of scenery acquisition and pre-processing may consist of providing a 3D geometry model of a scenery of said scenario. This may be done by scanning a real scenery, e.g., a real enclosure using Lidar-sensors and cameras, representing the data in a tessellated mesh format (such as the .stl-format) and reconstructing the 3D mesh with all objects preserved. The mesh or point cloud can be processed to identify 3D objects within the scene, such as furniture, walls, etc.. This may be done using machine learning 3D object detection techniques. This 3D machine learning prediction task involves detecting and segmenting the objects in the 3D scan. Then, materials and absorption coefficients associated to the dataset object classes may be applied automatically to the identified objects.

A preferred embodiment of the invention may comprise automatic identification of the materials from the data generated by the 3D scan, and material assignment to the model. The 3D mesh generated previously can be further processed to detect 3D object in the scene. Here Machine Learning 3D recognition techniques are used to segment then group points or triangles of the 3D scan into classified objects. This supervised deep learning prediction task requires the training on a large labeled dataset such as the one provided by Scannet[Dai 2017]. Then, a 3D recognition neural network, such as PointRCNN [Shi2019] or PointPillars[Lang2019], can be trained on such dataset to perform the predication task.

High end Boundary Element Method (BEM) and Finite Element Method (FEM) technologies have emerged in the recent past and together with parallel cloud computing make the modeling of generic room environment more feasible. A different, more asymptotic method like Beam Tracing provides a real breakthrough allowing simulation of the full audible frequency range in large rooms, in faster solving times compared to the more conventional FEM and BEM method. Still, whenever the model requires a change of the source representation, the whole acoustics simulation must be redone to accommodate the changes. Therefore, there is practical need for a method does not require the rerun of the simulation when the source model is changed. In addition, simulating the acoustic interaction between room and the belonging objects requires great expertise to achieve meaningful results. The effort is concentrated in manually crafting a model and assign the correct materials to provide accurate estimation of absorption coefficients. The correct selection of these coefficients is key to obtain accurate results for the simulation, which will also affect the realism of the immersive experience during auralization.

The invention solves the issue of coupling the point cloud representation of the objects inside the space, allowing the automatic identification of the objects' materials via machine learning 3d object detection techniques, and lessening the user's burden to manually craft the simulation model. It is an automatic method that can generate a digital twin of a room, while allowing rapid prototyping of source and room interaction in a virtual setting. The method allows room acoustics calculation independent of the type of source that is present. The invention uses a decoupling method to calculate the acoustic characteristics of a room and then recombine the directivity pattern of an arbitrary source to the final rendering. Coupled with the automatic detection of objects, this facilitates the use of virtual reality to industrial applications and democratizes the usage of acoustics simulation to non-expert audiences, while keeping high level of physically accurate representation of the model.

In an at least partially closed scenery - preferably an enclosure or a room - this pre-processing task may involve the measure of reverberant time (reverberation time of a scenery is defined as the time required for the sound level to decay by a certain degree after the acoustic impulse emission has stopped, herein RT60 is the reverberation time to drop by 60 dB) from impulse responses using the 3D mesh.

The reverberant time from impulse responses may be measured for the scanned room using simple devices or claps to generate the impulse. As example, one can employ the use of available apps for IOS, such as ClapReverb [Atelier 7hz]. The reverberant time can also be measured frequency-wise using narrow-band noise centered at the frequency of interest.

The acoustic simulation refers to simulating the acoustic transfer functions. An acoustic transfer function is defined as the relationship between a sound level of an acoustic source, and the sound level at some remote point known as the receiver, which may be understood as a microphone or a user's ear. The acoustic simulation is preferably performed for a full audible range frequency domain, coupling the spherical harmonics modes for source and receiver.

The acoustic simulation may use beam tracing algorithms [e.g. with Simcenter 3D] to calculate the transfer functions with physically accurate calculation of diffraction and multiple reflection problem. This approach is based on the beam-tree construction, which records all subdivisions of a solid angle around a point source into triangular pyramidal beams. These beams are shot into the model and specular reflection with all the surfaces is calculated. Once a receiver is located into the beam path, the beam is recursively subdivided until one of the supporting rays (from the initial subdivision) is close enough to the receiver again. Diffraction is handled by the identification of diffraction edges and the use of Keller cones to generate new sources arising from this edge. The approach is described in detail by [Noé 2009]. Results from simulation are the transfer functions from source to receiver relating pressure distributions in space, along with the reverberant time for each source-receiver pair. All the specificities described before allowing efficient calculations of acoustic transfer functions from source to listener for the whole audible range of frequencies. The transfer functions (TF) represent the harmonic response between different source and receiver directionality modes. The soundfield of an enclosure may be decomposed into a series of modes called Spherical Harmonics modes. In order to calculate the generated soundfield for the scanned enclosure, the invention may use the truncated expansion of both field representation of source and receiver. This generates pairs of coupled modes for both receiver and source according to the mode labeling. The beam-tracing simulation is then used to calculate the acoustic characteristics for each coupled mode in a frequency-wise fashion. The combination of all calculated transfer functions for each coupled mode provides the initial truncated representation of the soundfield in the enclosure. The approach allows the incorporation of any arbitrary directivity pattern for both receiver and source, even in the complex domain. Beneficially the calculated transfer functions allow the decoupling of room response from the source, giving path to the rapid switch between different acoustic sources to auralize, i.e. the user can assess how different sources will sound in the same environment without the necessity of rerunning the room acoustics simulation.

Estimation of the average absorption coefficient may be made using the volume and surface area of the room together with the measured reverberant time. The estimation may follow the well-known Sabine's empirical formula that relates the absorption coefficient and the size of a room to the measured reverberant time.

The method according to the invention may further comprise an error estimation. This may be done by comparing the measured reverberant time with the simulated reverberant time and creating a decision gate. If the relative error between the measured and calculated reverberant time is below a user-defined threshold, the simulation results may be stored and will serve as input to auralization or post-processing of the data. Otherwise, an optimization loop may be used to minimize the error. In this loop, the method may create a space of variations of the absorption coefficient and replace one (or several) absorption coefficients linked to an object. The feedback loop stops when the error criteria is reached or when all possible variations have been applied. In the latter case, the results that correspond to the minimum error are set as the output of this optimization.

The method according to the invention may further enable representing a source directivity into Spherical Harmonics. A source directivity may serve as an input to the expansion of data in terms of spherical harmonics (SH). The results of the expansion will serve as input to the synthesis of the model TFs to recreate the effect of the source presence in the modeled room.

The soundfield synthesis may be provided by a synthesis of the model transfer functions is carried through applying each paired contribution for each mode combination to the precalculated TFs. Synthesis of the model TFs is performed by applying each paired contribution for each mode combination to the precomputed TFs

Optionally and preferably as an additional step the error between the measured reverberant time and simulation results may be evaluated. If the error is above a predefined threshold, the absorption coefficient may be tuned according to predefined rules. Such tuning may be done using an optimization toolkit such as Simcenter Heeds to minimize the error. In general, if the simulated reverberation time is too low, the absorption coefficients (the ratio of absorbed energy to incident energy) should be reduced.

Another preferred embodiment of the invention provides a user-friendly environment to generate a virtual reality experience from a scenery or scenario. The necessity of accessible tools that allow broader audiences to recreate spaces into virtual reality arises from the democratization of virtual reality systems and the increasing potential of development of the so called Metaverse related technologies. The digital model of the scenery or enclosure serves as environment to human interaction in the so-called virtual reality (VR) for both personal and industrial applications. The realism of the immersive experience relies on physically accurate representation of the environment in both visual and auditory perception [Ahrens 2019], thus requiring a physically accurate representation of the soundscape in the full audible range. The preferred embodiment may comprise visualization and audio rendering of the auralization, wherein such method preferably comprises:
- tracking of at least one optic and/or acoustic receptor's orientation and position in the scenery,
- determining visualization of the scenery and/or an acoustic signal via the simulation to be received by said at least one sound receptor,
- displaying the visualization via a display and/or generating said acoustic signal audible to said receptor.

For a user's head orientation, a head tracker device may provide information regarding the position and head orientation of the user with respect to a reference in space that matches a reference in the virtual room. Such head orientation refers to optic and acoustic receptor's of a user, respectively eyes and ears. The orientation angles are used to orientate the representation of the receptor or listener directivity and give sense of the location of a source.

The streaming of the acoustic response is preferably played back to the receptor by a loudspeaker system of a headset.

A visual creation of the scene or scenario is preferably done from 3D scan data. Preferably after the acoustic transfer functions of the scenery are exported, the creation and generation of the 3D-environement starts. The process may begin with reusing the mesh and the textures and importing them into a game engine to create the visualization for the scene.

For rendering the visual impression and the acoustics the 3D objects of the scenario are coupled to the acoustic responses generated and all signals are rendered in real-time preferably using a virtual reality device.

According to a preferred embodiment of the invention said 3D geometry model is provided as a scan by scanning a 3D geometry model of the scenery. This scan does not necessarily require expensive measurements of the room and could be operated by a non-professional with commercial portable devices (smartphone or tablet computers). The scenery may be scanned by a Lidar-sensors and/or cameras. Hereby it may be understood that the difference between Lidar and camera technology is that Lidar emits a laser which reflection it receives, wherein cameras receive ambient light emitted from somewhere else. The output of the scan may represent the scenery as data in a tessellated mesh format e.g., STL file format which is native to the stereolithography CAD software created by 3D Systems.

Scanning and constructing the 3D mesh (scenery, room) [with a RGB-D camera and/or lidar capable camera] uses any acquisition system that allows the capturing of RGBD images (color and depth) preferably inside a room. These images can be transformed into an unstructured point cloud, given a set of camera parameters, to digitally represent the 3D-geometry.

As example, the Apple's Ipad Pro exhibits a lidar sensor and cameras that can be used for this step. The companion app Polycam [Polycam 2022] can also be used to generate the tesselated mesh and export it to CAE software such as Simcenter 3D.

Surface reconstruction operations, such as the Poisson surface reconstruction method [Kazhdan2006] can then be applied to the point cloud to generate a dense 3D geometry, i.e., a triangle mesh that serves as input to the simulation.

A preferred embodiment provides assigning absorption coefficients to the surfaces of said 3D geometry model of the objects. This method comprises:
- providing an identification-model, which identifies 3D-objects in a 3D geometry model and/or said 3D mesh,
- identifying in the 3D geometry model 3D-objects by said identification-model and assigning absorption coefficients of the surfaces of said 3D geometry model.

A still preferred embodiment comprises:
- providing a concordance assignment database of 3D-object identities to their acoustic parameters,
- identifying in the 3D geometry model 3D-objects by said identification-model and assigning absorption coefficients of the surfaces said 3D geometry model by said concordance assignment module.

Preferably these acoustic parameters comprise absorption coefficients of the surfaces of the objects.

A preferred embodiment of the invention provides that said identification-model applies machine learning 3D object detection techniques on basis of said 3D geometry model and/or scan and/or said mesh. Further the method provides automatically assigning absorption coefficients to the surfaces of said 3D objects. In addition, the method may also combine the acoustics simulation results to allow rendering of the soundscape in a realistic manner. Further, the generation of said soundscape via loudspeakers (free standing or headphones) is an additional step of a preferred embodiment.

One preferred application of the invention is the arrangement of a sound system in a scenery in particular in an enclosure. Sound from Hi-fi systems can be different depending on where speakers are located in a room how the room is shaped and furniture is arranged in the room and where the listener is located too. Conventionally generic rules and tips are applied to positioning speakers. This arrangement can be a time consuming, not user-friendly, and not applicable to all room configurations. Finally, the listener is not fully sure to have obtained the optimal configuration. Applying the invention to this situation enables to immerse an end-user in a Virtual or Augmented Reality environment to automatically identify the best position of the speakers based only on the room geometry - available by a scan -, speakers' characteristics, and listener audio preferences. Virtual reality, or VR for short, in the context of this invention is a representation and simultaneous perception of an apparent reality and its physical properties - here in particular including acoustics - in a real-time computer-generated, interactive virtual environment.

A preferred embodiment of the invention allows fast switch between arbitrary types of sources during auralization without the necessity of rerunning the room acoustics simulation. This is achieved by exploring the spherical harmonics representation of the sound field generated by an arbitrary directional source and captured by an arbitrary directional receiver. As indicated above another beneficial application of the invention is speaker's placement where end users could use the proposed invention to test several positions of their speakers in a room.

A preferred embodiment of the invention comprises visualization and audio rendering of the scenery.

This process may consist of creating and rendering the scene into a Virtual Reality Environment. Here, the visuals of the enclosure may be included in a virtual scene using the mesh and the textures. They may be imported to a game engine that supports deployment to a head tracking device. The 3D audio may be generated in real time by convolution of the raw source audio file with the source directivity, pre-computed transfer functions and listener head-related transfer functions. The latter may be updated based on the position/orientation updates from the head-tracking device.

A preferred embodiment of the invention provides constructing of said 3D mesh supported by machine learning techniques. This may comprise semantic instance reconstruction architectures, such as RfD-net [Nie 2021]. These techniques are able to reconstruct missing geometries due to occlusions, view constraints and weak illuminations during the scan, while performing the semantic 3D object detection. When using these later techniques, the room scanning and the 3d object detection operations will be merged.

Preferably after such reconstruction for each class label (e.g. sofa, books, carpet, wooden floor or tiles) in the simulation environment a material may be associated by query on database of average acoustic absorption properties per object.

The invention further refers to a system for carrying out the method as defined above and in the method-claims. The system comprises at least one processor prepared for processing:
(a) receiving a 3D geometry model of a scenery of said scenario,
(b) constructing a 3D mesh on basis of the 3D geometry model,
(c) assigning absorption coefficients to the surfaces of said 3D geometry model,
(d) processing said at least one sound source model comprising a spatial sound emission definition including a temporal progression of a noise emission,
(e) simulating the acoustics of at least one sound receptor located in the scenery.

Preferably said system may comprise at least one camera and/or LIDAR sensor for scanning said 3D geometry for providing said 3D geometry model of a scenery of said scenario.

Preferably said system may comprise at least one microphone or directional microphone for measuring of reverberant time from impulse responses using the 3D mesh after emitting an acoustic impulse.

Combining some or all of the above explained features the invention or preferred embodiments of it provide a faster and more accurate method to simulate and auralize the interaction between arbitrary sources and an scenery or enclosure. It is more efficient than conventional methods because it reduces the engineering effort to tailor the model by automatically assigning materials to an extensive mesh. This approach is cost reducing and saves effort within the processes of a design team.

The invention also extends the usage of acoustics simulation to non-expert audiences since no in-depth knowledge of the theoretical background is required to e.g., scan the room, perform the acoustics simulation, and auralize the results in the full audible range. Depending on the combination of features as explained above some key methods that bring advantage in comparison to the prior art may comprise: the combination of machine learning techniques to automate the process of assigning materials, the feedback loop that allow model update and optimization of the materials to match the estimate acoustics characteristics of the real room, and the modal contribution separation using spherical harmonics that avoid the rerunning of simulation whenever the source characteristics are changed.

### BRIEF DESCRIPTION OF THE DRAWINGS

Embodiments of the invention are now described, by way of example only, with reference to the accompanying drawings, of which:

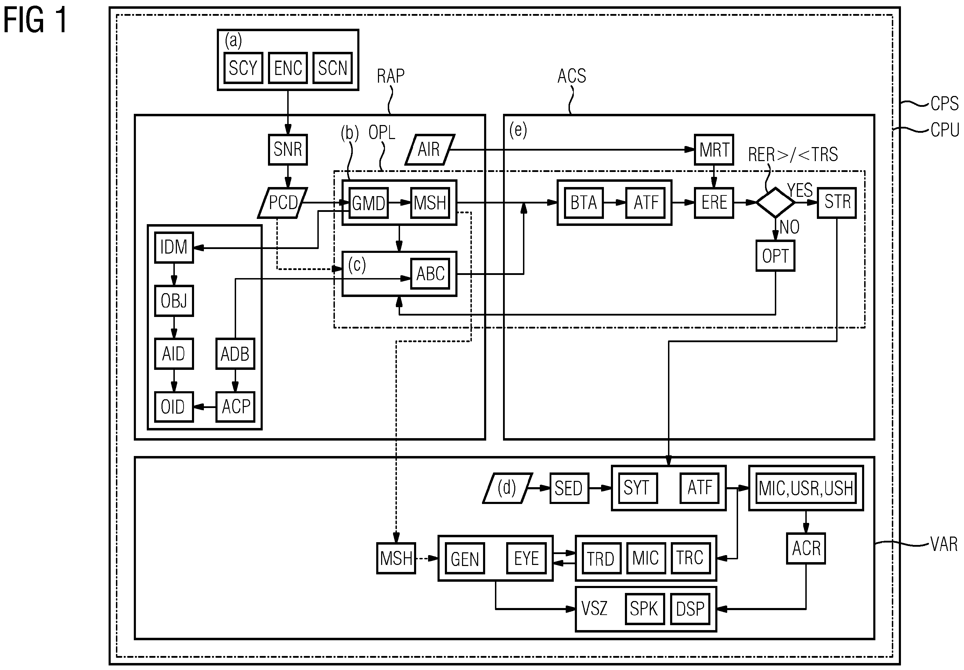

- Figure 1: shows a simplified flow diagram illustrating the method according to the invention as well as a schematical depiction of a system for performing the method.

The illustration in the drawings is in schematic form.

It is noted that in different figures, similar or identical elements may be provided with the same reference signs.

### DESCRIPTION OF THE DRAWINGS

Figure 1 shows a simplified flow diagram illustrating a method for auralizing a scenario SCN. Further figure 1 schematically illustrates a system CPS for carrying out the method. The system may comprise one or several processors CPU which may be part of a computer network to carry out the method steps. Such known computer configurations are not shown in detail.

A first set of steps RAP deals with scenery acquisition and preprocessing of the scenery.

During a first step (a) a 3D geometry model GMD of a scenery SCY of said scenario SCN is provided. This can be done as a direct feed into the system/method or via scanning said 3D geometry using at least one camera and/or LIDAR sensor SNR. The scan will provide a point cloud PCD which is basis for step (b) of generating a 3D-mesh of the corresponding 3D geometry model GMD.

In step (c) absorption coefficients ABC are assigning to the surfaces of said 3D geometry model GMD.

This is done by:
- providing an identification-model IDM, which identifies 3D-objects OBJ in a 3D geometry model GMD and/or said 3D mesh and
- identifying in the 3D geometry model GMD 3D-objects OBJ by said identification-model IDM and assigning absorption coefficients of the surfaces said 3D geometry model GMD.

Said identification-model IDM applies machine learning 3D object OBJ detection techniques AID when assigning absorption coefficients ABC to the surfaces.

Additionally, acoustic parameters ACP are assigned to the surfaces using a concordance assignment database ADB of 3D-object identities OID. These acoustic parameters comprise absorption coefficients ABC of the surfaces of the objects OBJ. The more trustworthy results of acoustic parameters ACP are to be applied in the subsequent steps The trustworthiness is assessed via comparing confidence values of the assignments preferably coming with the assignment processes.

A second set of steps ACS deals with an acoustic simulation. (e) simulating the acoustics of at least one sound receptor MIC located in the scenery SCY. This task consists of simulating transfer functions ATF, i.e. performing a full audible range frequency domain acoustic simulation, coupling the spherical harmonics modes for source and receiver. Then the error between the measured reverberant time and simulation results is estimated. If the error is above threshold, the absorption coefficient can be tuned using an optimization toolkit such as Simcenter Heeds to minimize the error.

Here beam tracing algorithms BTA are used to calculate the transfer functions ATF.

Parallel to the determination of the transfer functions ATF via the beam tracing algorithms BTA measuring of reverberant time MRT from an acoustic impulse response AIR using the 3D mesh MSH after emitting said acoustic impulse AIR is performed.

The measured reverberant time MRT is then compared with the simulated reverberant time from the transfer functions ATF during an error estimation ERE. If (=>YES) the relative error RER between the measured and calculated reverberant time is below a predefined threshold TRS, the simulation results are stored STR and will serve as input to auralization or post-processing of the data. Otherwise (=>NO), an optimization loop OPL is used to minimize the error including using an optimization toolkit OPT and performing step (c),
step (b), the beam tracing algorithms BTA and again the error estimation ERE.

A third set of steps VAR deals with visualization and audio rendering.

First, in step (d) at least one sound source model comprising a spatial sound emission definition SED including a temporal progression of a noise emission is provided. This includes a source directivity expansion into the scenery SCY.

The acoustic receptor's MIC orientation and position in the scenery SCN is tracked. This process and tracking device TRD tracks the user's head USH orientation by providing information regarding the position and head orientation of the user USR with respect to a reference in space that matches a reference in the virtual room. With this information an acoustic signal to be received by said sound receptor MIC is determined via synthesis SYT of the acoustic transfer functions ATF from the simulation.

Using the 3-D-mesh MSH a visual 3D-environement is created via a game engine GEN reusing the mesh and the textures and importing them into the game engine to create the visuals for the scenario SCN. The visual 3D-environement uses the user's head USH tracking TRC information of the tracking device TRD which is applied regarding the user's eye orientation EYE and the user's ear orientation (=>acoustic receptor MIC). The generated acoustic signal respectively the acoustic response ACR and the rendered visuals are sent to and played back in real time by a virtual reality device VSZ comprising displays DSP and speakers SPK.

The object of the invention is achieved by the independent claims. The dependent claims describe advantageous developments and modifications of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

Independent of the grammatical term usage, individuals with male, female or other gender identities are included within the term.

## Claims

**1.** A computer-implemented method for auralizing a scenario (SCN), comprising:
(a) providing a 3D geometry model (GMD) of a scenery (SCY) of said scenario (SCN),
(b) constructing a 3D mesh (MSH) on basis of the 3D geometry model (GMD),
(c) assigning absorption coefficients (ABC) to the surfaces of said 3D geometry model (GMD),
(d) providing at least one sound source model comprising a spatial sound emission definition (SED) including a temporal progression of a noise emission,
(e) simulating the acoustics of at least one sound receptor (MIC) located in the scenery (SCY).

**2.** Method according to claim 1, wherein assigning absorption coefficients to the surfaces of said 3D geometry model (GMD) of the objects (OBJ) comprises:
- providing an identification-model (IDM), which identifies 3D-objects (OBJ) in a 3D geometry model (GMD) and/or said 3D mesh,
- identifying in the 3D geometry model (GMD) 3D-objects (OBJ) by said identification-model (IDM) and assigning absorption coefficients of the surfaces said 3D geometry model (GMD).

**3.** Method according to claim 2, comprising:
- providing a concordance assignment database (ADB) of 3D-object identities (OID) to their acoustic parameters (ACP),
- identifying in the 3D geometry model (GMD) 3D-objects (OBJ) by said identification-model (IDM) and assigning absorption coefficients of the surfaces said 3D geometry model (GMD) by said concordance assignment module.

**4.** Method according to claim 1, wherein acoustic parameters comprise absorption coefficients (ABC) of the surfaces of the objects (OBJ).

**5.** Method according to claim 1 or 2, wherein providing said 3D geometry model (GMD) of a scenery (SCY) of said scenario (SCN) comprises scanning said 3D geometry using at least one camera and/or LIDAR sensor (SNR).

**6.** Method according to at least one of the claims 2 to 5, wherein said identification-model (IDM) applies machine learning 3D object (OBJ) detection techniques (AID) on basis of said scan and/or said mesh assigning absorption coefficients (ABC) to the surfaces of said 3D objects (OBJ).

**7.** Method according to at least one of the claims 2 to 6, comprising measuring of reverberant time (MRT) from an acoustic impulse response (AIR) using the 3D mesh (MSH) after emitting said acoustic impulse (AIR).

**8.** Method according to at least one of the preceding claims, wherein said scenery (SCY) is an enclosure (ENC).

**9.** Method according to at least one of the preceding claims, comprising:
- tracking (TRC) of at least one acoustic receptor's (MIC) orientation and position in the scenery,
- determining an acoustic signal via the simulation to be received by said at least one sound receptor (MIC).
- generating (ACR) said acoustic signal audible to said receptor (MIC).

**10.** Method according to at least one of the preceding claims, comprising:
- tracking of at least one optic receptor's (EYE) orientation and position in the scenery (SCN),
- determining a visualization (VSZ) of the scenery (SCN) from said 3D geometry model (GMD) of said scenery (SCY) for the perspective of the optic receptor (EYE),
- displaying the visualization (VSZ) via a display (DSP).

**10.** System (CPS) for carrying out the method according to at least one of the preceding claims, wherein said system comprises at least one processor (CPU) prepared for processing:
(a) receiving a 3D geometry model (GMD) of a scenery (SCY) of said scenario (SCN),
(b) constructing a 3D mesh (MSH) on basis of the 3D geometry model (GMD),
(c) assigning absorption coefficients to the surfaces of said 3D geometry model (GMD),
(d) processing said at least one sound source model comprising a spatial sound emission definition (SED) including a temporal progression of a noise emission,
(e) simulating the acoustics of at least one sound receptor (MIC) located in the scenery (SCY).

**11.** System (CPS) according to at least preceding claim 10, comprising at least one camera and/or LIDAR sensor (SNR) for scanning said 3D geometry for providing said 3D geometry model (GMD) of a scenery (SCY) of said scenario (SCN).

**12.** System (CPS) according to at least preceding claim 10 or 11, comprising at least one microphone (MIC) or directional microphone for measuring of reverberant time from impulse responses using the 3D mesh (MSH) after emitting an acoustic impulse.

**13.** System (CPS) according to at least preceding claim 10, 11 or 12, wherein the system further comprising:
- at least one tracking device (TRD) for tracking of at least one receptor's (MIC) orientation and position in the scenery,
- at least one speaker (SPK) for generating an acoustic signal audible to said receptor (MIC),
wherein said at least one processor (CPU) is connected to said at least one tracking device (TRD) and at least one speaker (SPK) and is prepared to carry out the method steps according to claim 9.

**14.** System (CPS) according to at least preceding claim 10, 11, 12 or 13, wherein said processor (CPU) is prepared for carrying out the method according to any of the preceding claims 1 to 9.
